(19) Europäisches Patentamt
European Patent Office
Office européen des brevets

(11) **EP 3 970 885 A2**

(12) **EUROPEAN PATENT APPLICATION**

(43) Date of publication:
**23.03.2022 Bulletin 2022/12**

(21) Application number: **21197195.7**

(22) Date of filing: **16.09.2021**

(51) International Patent Classification (IPC):
**B22F 10/28** *(2021.01)* **B22F 10/80** *(2021.01)*
**B22F 10/85** *(2021.01)* **B33Y 10/00** *(2015.01)*
**B33Y 30/00** *(2015.01)* **B33Y 50/00** *(2015.01)*
**B33Y 50/02** *(2015.01)* **B22F 10/36** *(2021.01)*
**B22F 10/368** *(2021.01)* **B22F 12/90** *(2021.01)*

(52) Cooperative Patent Classification (CPC):
(C-Sets available)
**B22F 10/28; B22F 10/36; B22F 10/368;**
**B22F 12/90; B33Y 10/00; B33Y 30/00; B33Y 50/02;**
B22F 2999/00                               (Cont.)

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **17.09.2020 JP 2020156393**

(71) Applicant: **Jeol Ltd.**
**Akishima-shi, Tokyo 196-8558 (JP)**

(72) Inventors:
• **KITAMURA, Shinichi**
  **Tokyo, 196-8558 (JP)**
• **TSUTAGAWA, Nari**
  **Tokyo, 196-8558 (JP)**

(74) Representative: **Boult Wade Tennant LLP**
**Salisbury Square House**
**8 Salisbury Square**
**London EC4Y 8AP (GB)**

(54) **THREE-DIMENSIONAL POWDER BED FUSION ADDITIVE MANUFACTURING APPARATUS AND THREE-DIMENSIONAL POWDER BED FUSION ADDITIVE MANUFACTURING METHOD**

(57) An object of the present invention is to improve the accuracy of temperature measurement of a build surface on which a three-dimensional build object is formed.

A three-dimensional powder bed fusion additive manufacturing apparatus (100) according to one aspect of the present invention includes a storage unit (54) that stores first correspondence information (541) that is correspondence information between an amount of thermal electrons emitted from a build surface and temperature of the build surface, the build surface being an uppermost layer among powder layers (13) formed by building up layers of a powder sample (11) on a build plate (9), a beam generating unit (2) that irradiates the build surface with a beam, a thermal electron detecting unit (19) that detects thermal electrons emitted from the build surface during irradiation of the beam, and a build surface temperature calculating unit (58) that calculates the temperature of the build surface with reference to the first correspondence information (541) on the basis of the thermal electrons detected by the thermal electron detecting unit (19).

(52) Cooperative Patent Classification (CPC): (Cont.)

C-Sets
B22F 2999/00, B22F 12/90, B22F 2202/06,
B22F 2203/11

**Description**

BACKGROUND

Technical Field

The present invention relates to a three-dimensional powder bed fusion additive manufacturing (PBF-AM) apparatus and a three-dimensional PBF-AM method of building an object by building up layers of a thinly spread powder sample on a layer-by-layer basis.

Related Art

In recent years, technology for building a three-dimensional object by which layers of cross-sectional shapes of an object are built up on the basis of design data generated by computer-aided design (CAD) or the like, whereby a three-dimensional object is built has attracted attention. Examples of such method of building an object include stereolithography, fused deposition modeling, selective laser sintering, and the like.
In a three-dimensional PBF-AM apparatus that builds an object by selective laser sintering, a powder sample (hereinafter, also simply referred to as "powder") is thinly spread on a build plate, and a portion of the spread powder (hereinafter, referred to as a "powder layer") desired to be built into an object is irradiated with a laser or an electron beam as a heat source, whereby the powder is melt. Then, the three-dimensional PBF-AM apparatus builds a three-dimensional object by repeating the above processing while moving the build plate in a height direction of a build object. For example, Patent Literature 1 discloses a method of manufacturing a three-dimensional build object by which a build object having a desired three-dimensional shape is manufactured by irradiating a powder material with a light beam to form a cured layer and stacking the cured layers.

Citation List

Patent Literature

Patent Literature 1: JP 2001-152204 A

SUMMARY

Incidentally, one of important parameters imparted to the optimization of build conditions for three-dimensional PBF-AM is temperature of a build surface on which the build object is formed. This is because, in a three-dimensional PBF-AM process, the irradiation time, intensity, and the like of the laser or electron beam are controlled on the basis of measured temperature of the build surface. That is, the temperature of the build surface needs to be appropriately measured.
Conventionally, the temperature of the build surface is measured with an infrared thermometer, thermocouple, or the like. However, in a case where measurement is performed with an infrared thermometer and the infrared thermometer is installed in the atmosphere outside a vacuum chamber, the build surface is measured through a transparent window glass made of quartz glass or the like provided in the vacuum chamber. Then, as building progresses, metal is deposited on the window glass by metal vapor generated during the building. Since in a case where such vapor deposition of the metal on the window glass progresses, the transmittance of the window glass decreases, the temperature of the build surface cannot be accurately measured with the infrared thermometer.
Although a thermocouple is often installed on the back surface of the build plate, the position of the build plate becomes away from the build surface as the building progresses. Therefore, in a case where the temperature of the build surface is measured with the thermocouple, it is necessary to obtain the temperature of the build surface by calculation in consideration of a distance from the build surface. Therefore, in particular, in a case where the position of the build plate is away from the build surface, the accuracy of the measured temperature of the build surface is not high.
The present invention has been made to solve the above problems. An object of the present invention is to improve the accuracy of temperature measurement of a build surface on which a three-dimensional build object is formed.
A three-dimensional PBF-AM apparatus according to one aspect of the present invention includes: a storage unit that stores first correspondence information that is correspondence information between an amount of thermal electrons emitted from a build surface and temperature of the build surface, the build surface being an uppermost layer among powder layers formed by building up layers of a powder sample on a build plate; a beam generating unit that irradiates the build surface with a beam; a thermal electron detecting unit that detects thermal electrons emitted from the build surface; and a build surface temperature calculating unit that calculates the temperature of the build surface with reference to the first correspondence information on the basis of the thermal electrons detected by the thermal electron detecting unit.

Additionally, a three-dimensional PBF-AM apparatus according to one aspect of the present invention includes: a storage unit that stores second correspondence information that is correspondence information between an amount of light emitted from a build surface and the temperature of the build surface, the build surface being an uppermost layer among powder layers formed by building up layers of a powder sample on a build plate; a beam generating unit that irradiates the build surface that is the uppermost layer among the powder layer with a beam; a photomultiplier tube (PMT) that detects light emitted from the build surface; and a build surface temperature calculating unit that calculates the temperature of the build surface with reference to the second correspondence information on the basis of the amount of the light detected by the PMT.

In addition, a three-dimensional PBF-AM method according to one aspect of the present invention includes: a step in which a storage unit stores first correspondence information that is correspondence information between an amount of thermal electrons emitted from a build surface and the temperature of the build surface, the build surface being an uppermost layer among powder layers formed by building up layers of a powder sample on a build plate; a step in which a beam generating unit irradiates the build surface with a beam; a step in which a thermal electron detecting unit detects thermal electrons emitted from the build surface; and a step in which a build surface temperature calculating unit calculates the temperature of the build surface with reference to the first correspondence information on the basis of the thermal electrons detected by the thermal electron detecting unit.

Furthermore, a three-dimensional PBF-AM method according to one aspect of the present invention includes: a step in which a storage unit stores second correspondence information that is correspondence information between an amount of light emitted from a build surface and temperature of the build surface, the build surface being an uppermost layer among powder layers formed by building up layers of a powder sample on a build plate; a step in which a beam generating unit irradiates the build surface with a beam; a step in which a PMT detects light emitted from the build surface; and a step in which a build surface temperature calculating unit calculates the temperature of the build surface with reference to the second correspondence information on the basis of the amount of the light detected by the PMT.

In the three-dimensional PBF-AM apparatus and the three-dimensional PBF-AM method according to one aspect of the present invention, the temperature of the build surface can be measured without an influence of metal vapor deposition by metal vapor, an influence of a change in a distance from the build surface, and the like. Therefore, the three-dimensional PBF-AM apparatus and the three-dimensional PBF-AM method according to one aspect of the present invention enable further improvement in accuracy of temperature measurement of the build surface. Problems, configurations, and effects other than the problems, configurations, and effects described above will be clarified by the following description of embodiments.

BRIEF DESCRIPTION OF DRAWINGS

FIG. 1 is a schematic cross-sectional view illustrating an overall configuration example of a three-dimensional PBF-AM apparatus according to a first embodiment of the present invention;

FIG. 2 is a block diagram illustrating a configuration example of a control system of the three-dimensional PBF-AM apparatus according to the first embodiment of the present invention;

FIG. 3 is a graph illustrating a configuration example of correspondence information between thermal electrons and build surface temperature according to the first embodiment of the present invention;

FIG. 4 is a graph illustrating a calculation example of a linear equation according to the first embodiment of the present invention;

FIG. 5 is a view illustrating an example of steps of three-dimensional PBF-AM processing according to the first embodiment of the present invention;

FIG. 6 is a flowchart illustrating an example of steps of build surface temperature measuring processing by the three-dimensional PBF-AM apparatus according to the first embodiment of the present invention;

FIG. 7 is a schematic cross-sectional view illustrating an overall configuration example of a three-dimensional PBF-AM apparatus according to a second embodiment of the present invention;

FIG. 8 is a schematic diagram illustrating a configuration of a secondary electron detector according to the second embodiment of the present invention;

FIG. 9 is a graph illustrating an example of a calibration curve according to the second embodiment of the present invention; and

FIG. 10 is a flowchart illustrating an example of steps of build surface temperature measuring processing by the three-dimensional PBF-AM apparatus according to the second embodiment of the present invention.

DETAILED DESCRIPTION

Hereinafter, exemplary embodiments of the present invention will be described with reference to the accompanying drawings. Note that components having substantially the same function or configuration in the respective drawings are denoted by the same reference signs, and redundant description will be omitted.

<First Embodiment>

[Configuration of Three-dimensional PBF-AM Apparatus]

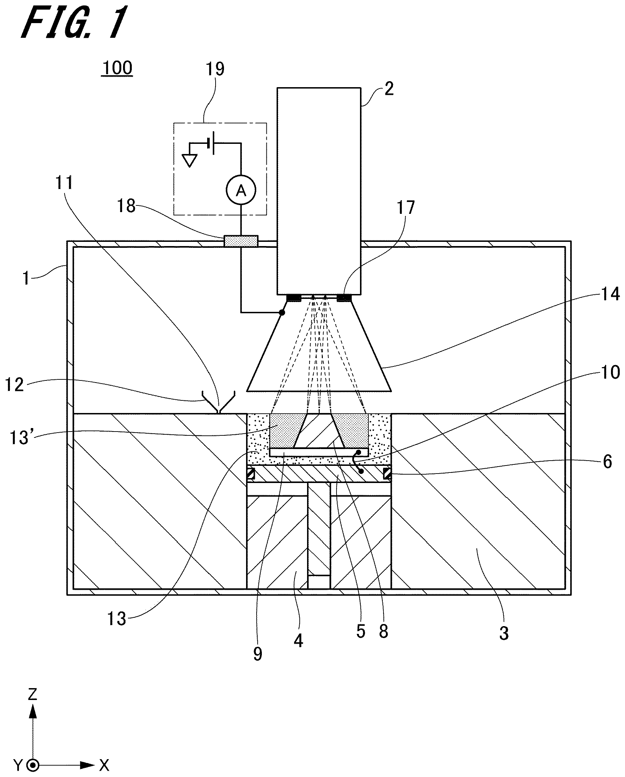

First, with reference to FIG. 1, a configuration of a three-dimensional PBF-AM apparatus 100 according to a first embodiment of the present invention will be described. FIG. 1 is a schematic cross-sectional view illustrating an overall configuration example of the three-dimensional PBF-AM apparatus 100.

In FIG. 1, a moving direction (vertical direction) of a powder table 5 of the three-dimensional PBF-AM apparatus 100 is defined as a Z direction, a first direction perpendicular to the Z direction is defined as an X direction, and a second direction perpendicular to the Z direction and the X direction is defined as a Y direction. That is, FIG. 1 is a cross-sectional view illustrating a cross section of a vacuum chamber 1 orthogonal to the Y direction.

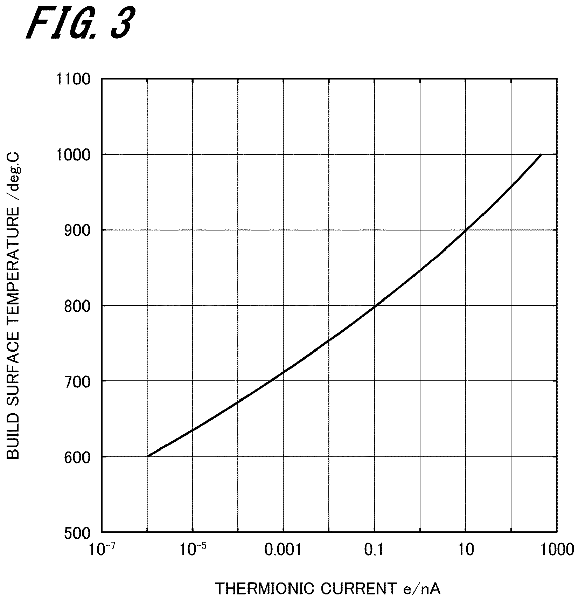

The three-dimensional PBF-AM apparatus 100 illustrated in FIG. 1 includes the vacuum chamber 1, an electron gun 2 (an example of a beam generating unit), and a build control device 50 (see FIG. 3), which will be described later, electrically connected to the vacuum chamber 1. The electron gun 2 is attached to an upper portion of the vacuum chamber 1.

A linear funnel 12 (an example of a powder supply unit) filled with metal powder 11 (an example of a powder sample) and a build frame table 3 having a cylindrical or angular cross section are provided in the inside of the vacuum chamber 1. A Z drive mechanism 4 is provided in an inner lower portion of the build frame table 3, and the powder table 5 on which layers of the metal powder 11 are build up is provided on an upper surface of the Z drive mechanism 4. The Z drive mechanism 4 is driven in the Z direction by a rack and a pinion, a ball screw, and the like (not illustrated), the powder table 5 moves in an up- and-down direction.

A flexible seal 6 that is a seal member having heat resistance and flexibility is provided in a gap portion between the build frame table 3 and the powder table 5. The flexible seal 6 is interposed between the powder table 5 and the inner peripheral surface of the build frame table 3 and seals between the powder table 5 and the inner peripheral surface of the build frame table 3 so that the metal powder 11 does not fall from between the powder table 5 and the inner peripheral surface of the build frame table 3. Additionally, the flexible seal 6 is slidably in contact with the inner peripheral surface of the build frame table 3. Note that the atmosphere in the vacuum chamber 1 is evacuated by a vacuum pump (not illustrated), and the inside of the vacuum chamber 1 is maintained in vacuum.

A build plate 9 that is a stage on which a build object 8 is formed is disposed above the powder table 5 in a state in which the build plate 9 is raised by the spread metal powder 11 (powder layer 13). The build plate 9 is grounded to the powder table 5 having a ground (GND) potential via a GND line 10 for the purpose of preventing electrical floating.

At the time of building, the metal powder 11 is spread to a height substantially the same as the height of the build frame table 3 by the linear funnel 12 filled with the metal powder 11. Note that the metal powder 11 is appropriately replenished in the linear funnel 12 from a powder hopper (not illustrated). An area of the build object 8 on a slightly sintered body 13' for one layer is two-dimensionally irradiated with an electron beam emitted from the electron gun 2 and melted, whereby the build object 8 for one layer is formed. Then, layers of the melted (and solidified) metal powder 11 are stacked, whereby a three-dimensional build object 8 is constructed.

An area other than the build object 8 in the powder layer 13 in the powder table 5 becomes a slightly sintered body 13' that has been slightly sintered by being irradiated with an electron beam from the electron gun 2, and the slightly sintered body 13' has conductivity.

A metal deposition preventive cover 14 is attached via an insulator 17 to a lower surface of the electron gun 2 at a position covering a side surface of an area through which the electron beam passes. Since the deposition preventive cover 14 is provided, it is possible to prevent metal vapor generated at the time of building, metal spatters by fireworks, and the like from depositing on an inner wall of the vacuum chamber 1.

As a material of the deposition preventive cover 14, metal such as titanium (Ti), a titanium-based compound, or an alloy such as stainless steel can be applied, but the material is not limited to thereto as long as the material emits fewer secondary electrons. The thickness of the deposition preventive cover 14 is preferably about 0.5 mm but may be thinner or thicker than about 0.5 mm. Note that an attachment position of the deposition preventive cover 14 is not limited to the lower surface of the electron gun 2. For example, in cases such as a case where the electron gun 2 is attached to the upper surface of the vacuum chamber 1, the deposition preventive cover 14 may also be attached to the upper surface of the vacuum chamber 1.

A voltage superimposed current amplifier 19 (an example of each of the thermal electron detecting unit and the voltage applying unit) is connected to the deposition preventive cover 14 via a current introduction terminal 18 attached to the vacuum chamber 1. The voltage superimposed current amplifier 19 applies, to the deposition preventive cover 14, a voltage of plus several V or more with respect to the GND potential.

In a case where the build object 8 or the slightly sintered body 13' is heated at high temperature by the electron beam, whereby thermal electrons are emitted from a build surface, the thermal electrons are drawn into the deposition preventive cover 14 by a positive potential gradient. Then, the voltage superimposed current amplifier 19 detects, as a current, a change in the thermal electrons trapped by the deposition preventive cover 14.

As the voltage superimposed current amplifier 19, for example, a logarithmic amplifier can be used. In this case, the voltage superimposed current amplifier 19 can perform measurement in a dynamic range of 5 digits or more, and a temperature of approximately 700° to approximately 1200° can be calculated by conversion. Additionally, control may be performed to change a gain of the voltage superimposed current amplifier 19 according to a range of temperature to be measured. Such control makes it possible to measure the build surface temperature more accurately.

Note that the measurement of the thermal electrons by the voltage superimposed current amplifier 19 is performed at timing when the electron gun 2 does not emit the electron beam (the electron beam is off) in a process of three-dimensional PBF-AM processing. Alternatively, the electron beam may be converted into a pulse beam, and the voltage superimposed current amplifier 19 may measure the thermal electrons at timing when the pulse beam is off. In this case, a lock-in amplifier is used as the voltage superimposed current amplifier 19, thermal electrons are detected with a frequency (pulse frequency) of the pulse beam used as a reference (reference signal), whereby thermal electrons having lower temperature can be detected.

Alternatively, in scenes in which an irradiation current of the electron beam is constant, such as in a powder heat (PH) process and an after heat (AH) process in the three-dimensional PBF-AM processing, the voltage superimposed current amplifier 19 may detect a thermionic current in a state in which the electron beam has been emitted. In this case, the build surface temperature calculating unit 58 needs to calculate the build surface temperature by using a thermionic current obtained by offsetting a thermionic current assumed to be generated by the irradiation of the electron beam from the thermionic current detected by the voltage superimposed current amplifier 19.

[Configuration of Control System of Three-dimensional PBF-AM Apparatus]

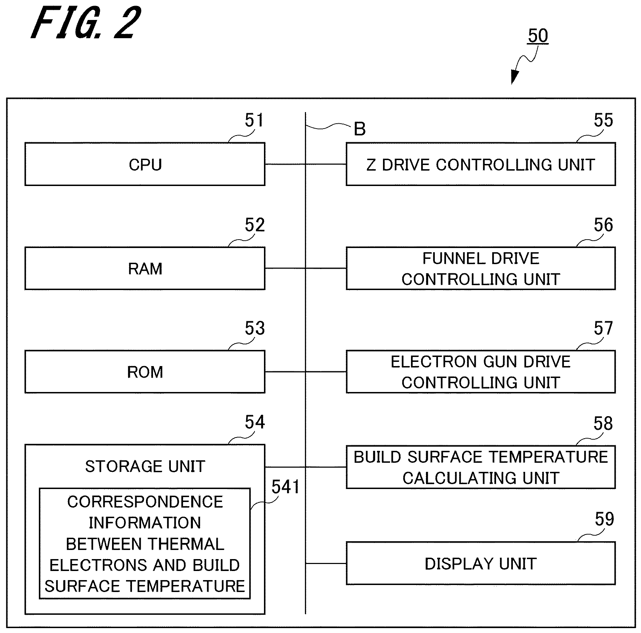

Next, with reference to FIG. 2, a configuration example of a control system (build control device 50) of the three-dimensional PBF-AM apparatus 100 will be described. FIG. 2 is a block diagram illustrating the configuration example of a control system of the build control device 50.

The build control device 50 illustrated in FIG. 2 includes a central processing unit (CPU) 51, a random access memory (RAM) 52, a read only memory (ROM) 53, a storage unit 54, a Z drive controlling unit 55, a funnel drive controlling unit 56, an electron gun drive controlling unit 57, the build surface temperature calculating unit 58, a display unit 59, and the like.

The CPU 51 reads a build program stored in the ROM 53 or the like and controls the processing and operation of each unit according to the build program. Additionally, the CPU 51 is connected to each unit constituting the build control device 50 via a system bus B so that the CPU 51 can transmit and/or receive data mutually to/from each unit.

The RAM 52 is a volatile storage unit that temporarily stores data and is used as a work area when the CPU 51 performs control. The ROM 53 stores the build program executed by the CPU 51, parameters (PBF-AM data) of the build object 8, and the like.

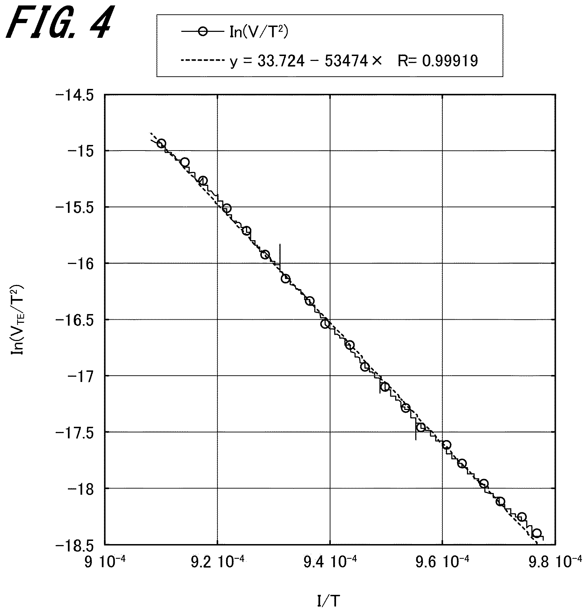

The storage unit 54 includes a hard disc drive (HDD), a solid state drive (SSD), and the like and stores correspondence information between thermal electrons and build surface temperature 541 and the like. The correspondence information between thermal electrons and build surface temperature 541 (an example of first correspondence information) is obtained by associating an amount of the thermal electrons (thermionic current) with the temperature of the build surface (build surface temperature) and is referred to by the build surface temperature calculating unit 58. The correspondence information between thermal electrons and build surface temperature 541 is illustrated by, for example, a graph in which the thermionic current is taken on a horizontal axis and the build surface temperature is taken on a vertical axis or the like. With reference to FIG. 4, details of the correspondence information between thermal electrons and build surface temperature 541 will be described later.

The Z drive controlling unit 55 controls the operation of the Z drive mechanism 4 (see FIG. 1) under the control of the CPU 51. The funnel drive controlling unit 56 controls the operation of the linear funnel 12 (see FIG. 1) under the control of the CPU 51. The electron gun drive controlling unit 57 controls the operation of emitting the electron beam that is emitted from the electron gun 2, that is, irradiation timing, irradiation time, an irradiation intensity, an irradiation position, and the like under the control of the CPU 51. The operation of emitting the electron beam is controlled by the electron gun drive controlling unit 57 on the basis of information on the build surface temperature calculated by the build surface temperature calculating unit 58.

The build surface temperature calculating unit 58 calculates the temperature of the build surface on the basis of correspondence information between the thermal electrons detected by the voltage superimposed current amplifier 19 and the temperature of the build surface. Specifically, the build surface temperature calculating unit 58 refers to the correspondence information between thermal electrons and build surface temperature 541 to acquire the build surface temperature associated in advance with the thermal electrons detected by the voltage superimposed current amplifier 19.

The display unit 59 includes, for example, a liquid crystal display (LCD), an organic electro luminescence (EL) display device, or the like, and the display unit 59 displays information on settings of three-dimensional PBF-AM, errors, warnings, and the like.

[Configuration of Correspondence Information Between Thermal Electrons and Build Surface Temperature]

Next, with reference to FIG. 3, a configuration of the correspondence information between thermal electrons and build surface temperature 541 will be described. FIG. 3 is a graph illustrating a configuration example of the correspondence information between thermal electrons and build surface temperature 541.

A horizontal axis of the correspondence information between thermal electrons and build surface temperature 541 illustrated in FIG. 3 illustrates a thermionic current (nA), and a vertical axis illustrates the build surface temperature (°C). The correspondence information between thermal electrons and build surface temperature 541 can be generated, for example, by measuring a relationship between temperature T measured in advance with an infrared thermometer, a thermocouple (both not illustrated) or the like and a thermionic current I detected by the voltage superimposed current amplifier 19 and then obtaining a constant $a$ and a constant $b$ by using the following equation (1) (an example of a "temperature conversion equation").

$$I = a \cdot T^2 \cdot e^{h/T} \ldots \text{Equation (1)}$$

Alternatively, in an equation developed as the following equation (2), a relationship between a natural logarithm $\ln(I/T^2)$ and $1/T$ may be plotted in a graph, and the constant $a$ and the constant $b$ may be obtained on the basis of an inclination $b$ and an intercept $\ln a$ of a linear equation obtained by the plotting.

$$\ln(I/T^2) = b \cdot 1/T - \ln a \ldots \text{Equation (2)}$$

The linear equation can be obtained by using a least squares method or the like. FIG. 4 is a graph illustrating a calculation example of the linear equation. A horizontal axis of the graph illustrated in FIG. 4 illustrates "1/T", and a vertical axis illustrates $\ln(V_{TE}/T^2)$ related to a detection voltage of the voltage superimposed current amplifier 19. A curve line marked with circles illustrated in FIG. 4 is obtained by connecting values plotted on the graph. Then, a straight line (approximate expression) illustrated by a broken line in FIG. 4 can be obtained by using a least squares method or the like.

Note that the build surface temperature calculating unit 58 may change the temperature conversion equation described above according to a material of the build object 8, a proportion of the build object 8 in the build surface, or the like. This is because an emission amount of the thermal electrons varies according to a state of a surface of the build surface, a work function of the material of the build object 8, and the like. In the case of performing such control, it is necessary to measure the correspondence information between the thermionic current and the temperature in advance for each of the build plate 9 including steel use stainless (SUS) 304 or the like, the slightly sintered body 13' including Ti64 or the like, and the build object 8.

Additionally, as for the correspondence information between thermal electrons and build surface temperature 541, a correspondence relationship may be fixedly determined without using the temperature conversion equation described above. For example, the amount of the thermal electrons with respect to temperature required as a threshold value of the control of the electron beam may be calculated in advance, and a correspondence relationship the thermal electrons and the temperature may be recorded in advance as the correspondence information between thermal electrons and build surface temperature 541.

[Three-dimensional PBF-AM Processing]

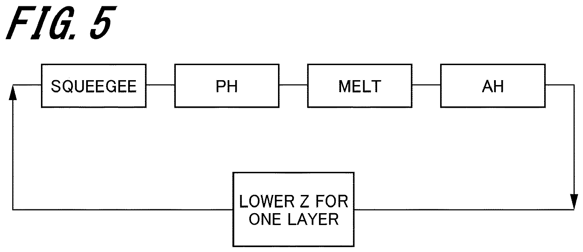

Next, with reference to FIG. 5, basic three-dimensional PBF-AM processing according to the present embodiment will be described. FIG. 5 is a diagram illustrating an example of steps of the three-dimensional PBF-AM processing.

In the three-dimensional PBF-AM processing, as illustrated in FIG. 5, a squeegee process, a PH process, a melting process, and an AH process are performed.

In a previous stage of the squeegee process (a subsequent stage of the AH process), the Z drive controlling unit 55 (see FIG. 2) drives the Z drive mechanism 4 (see FIG. 1), thereby lowering the powder table 5 to a position at which an upper surface of the build plate 9 is slightly lower than an upper surface of the build frame table 3. ΔZ that is the slightly decreased amount corresponds to a layer thickness in the Z direction in the build object 8.

<Build Plate Heating Process>

In the build plate heating process (not illustrated in FIG. 5) performed before the squeegee process, the electron gun drive controlling unit 57 (see FIG. 2) controls the electron gun 2 and causes the electron gun 2 to irradiate the build plate 9 with the electron beam to heat the build plate 9.

Specifically, the electron gun drive controlling unit 57 controls the electron gun 2, thereby causing the electron gun 2 to scan the electron beam and irradiate an area of the build plate 9 slightly narrower than the entire upper surface of the build plate 9 with the electron beam. Then, the temperature of the build plate 9 is increased in advance to temperature at which the metal powder 11 to be spread thereafter is slightly sintered. When the temperature of the build plate 9 is increased, the metal powder 11 (powder layer 13) around the build plate 9 is slightly sintered and turned into the slightly sintered body 13'.

In the build plate heating process, the electron gun drive controlling unit 57 turns off the irradiation of the electron beam by the electron gun 2 at every predetermined time. Then, while the electron beam is turned off, the voltage superimposed current amplifier 19 detects the thermal electrons, and the build surface temperature calculating unit 58 calculates the build surface temperature on the basis of an amount of the detected thermal electrons (thermionic current). The electron gun drive controlling unit 57 controls the operation of emitting the electron beam (irradiation intensity and irradiation time) and the like so that the build surface temperature calculated by the build surface temperature calculating unit 58 is increased to predetermined temperature. As a result, the metal powder 11 in an area irradiated with the electron beam can be slightly sintered in a reliable manner.

<Squeegee Process>

In the squeegee process, the funnel drive controlling unit 56 (see FIG. 3) moves the linear funnel 12 filled with the metal powder 11 to an opposite position along the upper surface of the build plate 9 and spreads the metal powder 11 corresponding to ΔZ on the build plate 9 and the periphery thereof.

<PH Process>

In the next PH process, the funnel drive controlling unit 56 (see FIG. 3) supplies a predetermined amount of the metal powder 11 onto the build plate 9 from a powder hopper (not illustrated).

In the PH process, the electron gun drive controlling unit 57 controls the electron gun 2, thereby causing the electron gun 2 to irradiate the surface of the slightly sintered body 13' on the build plate 9 with the electron beam to heat a surface of the slightly sintered body 13'. Also in the PH process, the measurement of the build surface temperature by the build surface temperature calculating unit 58 and the operation control of the electron beam on the basis of the measured build surface temperature are performed.

<Melting Process>

In the next melting process, the electron gun drive controlling unit 57 controls the electron gun 2, thereby causing the electron gun 2 to irradiate the surface of the slightly sintered body 13' on the build plate 9 with the electron beam and melt a two-dimensional shape area obtained by slicing a build model represented by the build program for one layer (ΔZ). Also in the melting process, the measurement of the build surface temperature by the build surface temperature calculating unit 58 and the operation control of the electron beam on the basis of the measured build surface temperature are performed.

<AH Process>

In the next AH process, the electron gun drive controlling unit 57 controls the electron gun 2, thereby causing the electron gun 2 to irradiate a surface of the build object 8 on the build plate 9 and the surface of the slightly sintered body 13' with the electron beam to heat the surface of the build object 8 and the surface of the slightly sintered body 13'. Also in the AH process, the measurement of the build surface temperature by the build surface temperature calculating unit 58 and the operation control of the electron beam on the basis of the measured build surface temperature are performed.

After the completion of the AH process, the process returns to a squeegeeing process in the next layer (layer lowered by ΔZ), and thereafter, the squeegee process, the PH process, the melting process, and the AH process are repeated. Then, after the completion of the melting process in the last layer of the build object 8, the three-dimensional PBF-AM processing is completed. As a result, the build object 8 in which melting portions are stacked on a layer-by-layer (ΔZ-increment) basis is formed.

[Build Surface Temperature Measuring Processing]

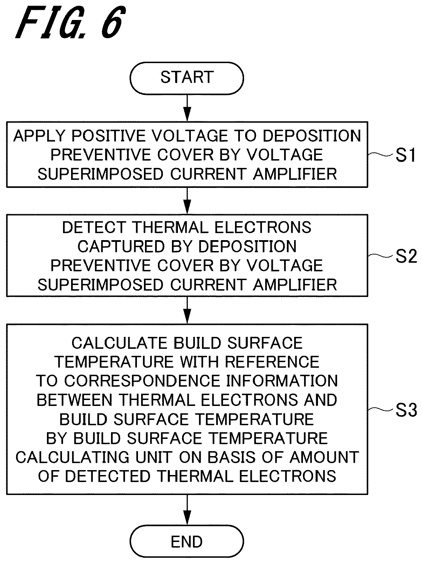

Next, with reference to FIG. 6, description will be given on the build surface temperature measuring processing by the three-dimensional PBF-AM apparatus 100, which is performed in each process of the PH process, the melting process, and the AH process of the three-dimensional PBF-AM processing. FIG. 6 is a flowchart illustrating an example of steps of the build surface temperature measuring processing by the three-dimensional PBF-AM apparatus 100.

First, the CPU 51 of the three-dimensional PBF-AM apparatus 100 (see FIG. 2) controls the voltage superimposed current amplifier 19 (see FIG. 1), thereby causing the voltage superimposed current amplifier 19 to apply a positive voltage to the deposition preventive cover 14 (step S1). Next, the voltage superimposed current amplifier 19 detects the thermal electrons captured by the deposition preventive cover 14 (step S2). Next, the build surface temperature calculating unit 58 calculates the build surface temperature with reference to the correspondence information between thermal electrons and build surface temperature 541 on the basis of an amount of the thermal electrons detected in step S2 (step S3). After the processing of step S3, the build surface temperature measuring processing by the three-dimensional PBF-AM apparatus 100 is completed.

According to the embodiment described above, there is no influence of metal vapor deposition by metal vapor, unlike a case where the build surface temperature is measured with an infrared thermometer. Additionally, there is also no influence of a change in a distance from the build surface, unlike a case where the build surface temperature is measured with a thermocouple. That is, since the build surface temperature can be more accurately measured than a case where measurement is performed with an infrared thermometer, a thermocouple, or the like, the accuracy of the measurement of the build surface temperature can be further improved.

Additionally, in the embodiment described above, the deposition preventive cover 14 is used to measure an amount of the thermal electrons, and the build surface temperature is calculated on the basis of the amount of thermal electrons. The deposition preventive cover 14 is provided for the purpose of preventing metal vapor generated at the time of building, metal spatters by fireworks, and the like from depositing on the inner wall of the vacuum chamber 1. Therefore, the present embodiment enables more appropriate measurement of the build surface temperature without providing a new device, apparatus, and the like for the measurement of the build surface temperature and causing a cost increase.

Additionally, in the embodiment described above, the build surface temperature calculating unit 58 can change the temperature conversion equation according to the material of the build object 8, a proportion of the build object 8 generated by irradiating the slightly sintered body 13' with the electron beam in the build surface, or the like. Therefore, the present embodiment enables more appropriate measurement of the build surface temperature in accordance with a change in these conditions.

Additionally, in the embodiment described above, the voltage superimposed current amplifier 19 is formed by a lock-in amplifier, whereby with a frequency of the electron beam that has been converted into a pulse beam used as a reference, the voltage superimposed current amplifier 19 can detect the thermal electrons at timing when the pulse beam is turned off. Therefore, even in the middle of a build process, the build surface temperature can be detected without turning off the electron beam for a long period of time. Additionally, the voltage superimposed current amplifier 19 including the lock-in amplifier can detect lower temperature of the build surface temperature.

<Second Embodiment>

[Configuration of Three-dimensional PBF-AM Apparatus]

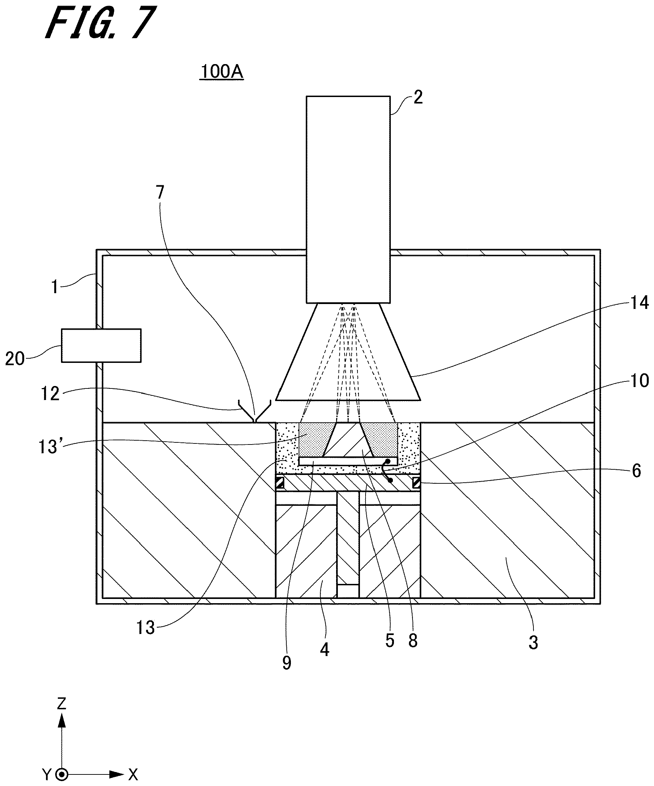

Next, with reference to FIG. 7, a configuration of a three-dimensional PBF-AM apparatus 100A according to a second embodiment of the present invention will be described. FIG. 7 is a schematic cross-sectional view illustrating an overall configuration example of the three-dimensional PBF-AM apparatus 100A.

Also in FIG. 7, similarly to FIG. 1, a moving direction (vertical direction) of a powder table 5 of the three-dimensional PBF-AM apparatus 100A is defined as a Z direction, a first direction perpendicular to the Z direction is defined as an X direction, and a second direction perpendicular to the Z direction and the X direction is defined as a Y direction.

The configuration of the three-dimensional PBF-AM apparatus 100A illustrated in FIG. 7 is different from the configuration of the three-dimensional PBF-AM apparatus 100 illustrated in FIG. 1 in that a secondary electron detector 20 is attached to a side surface of a vacuum chamber 1. Since other configurations are substantially the same as the configurations of the three-dimensional PBF-AM apparatus 100 illustrated in FIG. 1, the description thereof will be omitted here.

The secondary electron detector 20 is provided in the three-dimensional PBF-AM apparatus 100A for the purpose of observing a secondary electron image and detects secondary electrons generated from a build object 8 as a sample in normal operation. In the present embodiment, the secondary electron detector 20 detects light generated from a heated build surface, and a build surface temperature calculating unit 58 calculates build surface temperature on the basis of the detected light.

[Configuration of Secondary Electron Detector]

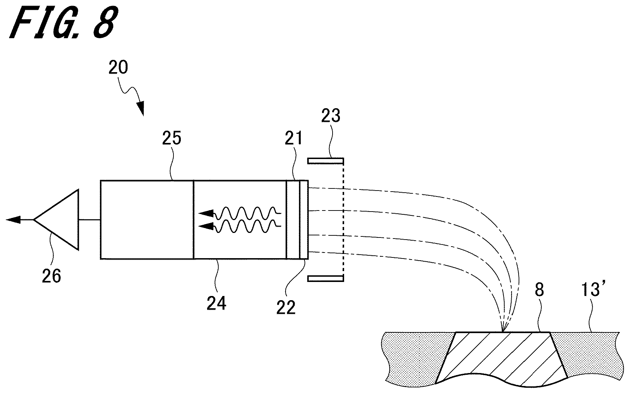

Next, with reference to FIG. 8, a configuration of the secondary electron detector 20 will be described. FIG. 8 is a schematic diagram illustrating the configuration of the secondary electron detector 20.

As illustrated in FIG. 8, the secondary electron detector 20 includes a light guide 24 and a PMT 25. The light guide 24 is a glass rod including quartz glass and the like, and light propagates through the glass rod. A scintillator 21 is provided at a distal end of the light guide 24, and a phosphor 22 is attached to a surface of the scintillator 21. A collector 23 that is an electrode is arranged in front of the phosphor 22 (right side in the figure) .

A voltage whose upper limit is about several 100 V to the collector 23 is applied, whereby an electric field is generated, and secondary electrons emitted from the build surface (build object 8 and slightly sintered body 13') are collected and guided by the electric field to the secondary electron detector 20. The secondary electrons guided to the secondary electron detector 20 are further accelerated by a high voltage of +10 kV applied to the phosphor 22 of the scintillator 21, collide with the scintillator 21, and emit light. The light propagates through the light guide 24, is guided to the PMT 25, and is converted into electrons again. Then, the electrons converted by the PMT 25 are amplified by an amplifier 26 to turn into an electric signal (detection signal).

In the present embodiment, the PMT 25 detects light in a state in which a voltage of +10 kV is not applied to the scintillator 21. Since in a case where no voltage is applied to the scintillator 21, the secondary electrons emitted from the build surface are not attracted to the secondary electron detector 20, the phosphor 22 does not emit light. However, in a case where light generated from the build surface during building enters the light guide 24, the light is detected by the PMT 25.

During the building, that is, during irradiation with the electron beam, the temperature of the build surface reaches temperature exceeding 700°C (approximately 1000 K) and therefore light emitted from the build surface turns into a state in a range of red heat to white heat. Then, as the temperature of the build surface becomes higher, the light emitted from the build surface turns into light having a shorter wavelength such as infrared light or visible light. The PMT 25 used in the secondary electron detector 20 has low sensitivity to light in an infrared wavelength region, but as the wavelength of incident light becomes shorter, a change in the electric signal to be detected becomes steeper, that is, the sensitivity becomes higher.

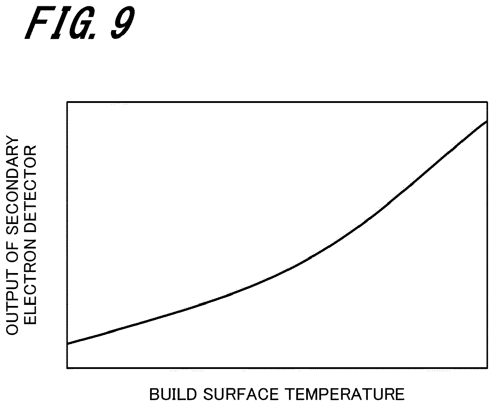

Therefore, in the present embodiment, the build surface temperature is measured in advance with an infrared thermometer or the like (not illustrated), and a relationship between the detection signal of the PMT 25 and the surface temperature in a state in which no voltage is applied to the scintillator 21 is measured in advance. Then, a calibration curve (an example of second correspondence information) as illustrated in FIG. 9 is obtained in advance, whereby the build surface temperature is obtained on the basis of an output value of the secondary electron detector 20, that is, the detection signal of the PMT 25.

FIG. 9 is a graph illustrating an example of the calibration curve. A horizontal axis of the graph illustrated in FIG. 9 illustrates the build surface temperature, and a vertical axis illustrates the output of the secondary electron detector 20 (detection signal of the PMT 25). The graph illustrated in FIG. 9 illustrates that as the build surface temperature becomes higher, a change in the detection signal of the PMT 25 becomes steeper.

Note that in the present embodiment, there has been described an example in which the calibration curve is used as correspondence information between an amount of the light detected by the PMT 25 and the build surface temperature, but the present invention is not limited to the example. The correspondence information between the amount of light detected by the PMT 25 and the build surface temperature may be illustrated by a table or may be expressed by a temperature conversion equation or the like.

Since a configuration of a control system of a build control device of the three-dimensional PBF-AM apparatus 100A is substantially the same as the configuration illustrated in FIG. 2, the description thereof will be omitted here. A difference between the configuration illustrated in FIG. 2 and a configuration according to the second embodiment is that information stored in a storage unit 54 is the calibration curve instead of the correspondence information between thermal electrons and build surface temperature 541.

[Build Surface Temperature Measuring Processing]

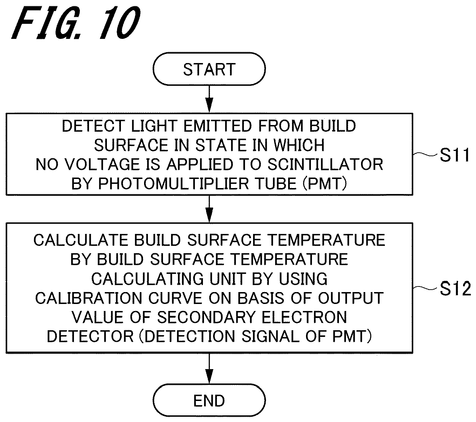

Next, with reference to FIG. 10, description will be given on build surface temperature measuring processing by the three-dimensional PBF-AM apparatus 100A, which is performed in each of a PH process, a melting process, and an AH process of three-dimensional PBF-AM processing. FIG. 10 is a flowchart illustrating an example of steps of the build surface temperature measuring processing by the three-dimensional PBF-AM apparatus 100A. As in the first embodiment described above, the build surface temperature measuring processing is also performed in each of the PH process, the melting process, and the AH process of the three-dimensional PBF-AM processing.

First, in a state in which no voltage is applied to the scintillator 21 (see FIG. 8), the PMT 25 detects light emitted from the build surface (step S11). Next, the build surface temperature calculating unit 58 (see FIG. 2) calculates the build surface temperature by using the calibration curve on the basis of the output value of the secondary electron detector 20 (detection signal of the PMT 25) (step S12).

Note that the build surface temperature measuring processing according to the second embodiment is also performed while the electron beam is turned off. Alternatively, as in the first embodiment, the electron beam may be converted into a pulse beam, and the PMT 25 may detect light emitted from the build surface with a frequency of the pulse beam used as a reference.

Also according to the second embodiment described above, effects similar to the effects obtained by the first embodiment can be obtained.

Note that the present invention is not limited to each of the embodiments described above, and it is a matter of course that various other application examples and modification examples can be adopted as long as the application examples and the modification examples do not deviate from the gist of the present invention described in the claims.

For example, in each of the embodiments described above, a case where the powder layer 13 is irradiated with the electron beam and melted, whereby a three-dimensional structure is generated has been described as an example, but the present invention is not limited to the example. The present invention may be applied to a method of irradiating a powder layer with a laser.

Additionally, for example, a warning may be notified to a user via the display unit 59 or the like in a case where during heating of the build surface by the electron beam, a result of the measurement of the build surface temperature by another measuring means such as a thermocouple is compared with a result of the calculation of the build surface temperature on the basis of the detected amount of the thermal electrons or light and a difference between both values is large. Such control is performed, whereby in a case where an abnormality has occurred in any of a conventional measurement means and the voltage superimposed current amplifier 19 or the secondary electron detector 20, it is possible to detect the occurrence of the abnormality and to notify the user of the occurrence of the abnormality.

Additionally, for example, regarding the embodiments described above, the configurations of the apparatuses, devices, and systems have been described in detail and specifically in order to describe the present invention in an easy-to-understand manner, and the present invention is not necessarily limited to apparatuses, devices and systems having all the described configurations. Additionally, it is possible to replace a part of the configuration of one embodiment can be replaced with the configuration of another embodiment. Additionally, it is also possible to add the configuration of another embodiment to the configuration of one embodiment. Additionally, it is also possible to add, delete, and replace other configurations with respect to a part of the configuration of each embodiment.

Description of Symbols

1 vacuum chamber
2 electron gun
3 build frame table
4 Z drive mechanism
5 powder table
6 flexible seal
8 build object
9 build plate
10 GND line
11 metal powder
12 linear funnel
13' slightly sintered body
14 deposition preventive cover
17 insulator
18 current introduction terminal
19 voltage superimposed current amplifier
20 secondary electron detector

21 scintillator
22 phosphor
23 collector
24 light guide
25 photomultiplier tube (PMT)
26 amplifier
50 build control device
55 Z drive controlling unit
56 funnel drive controlling unit
57 electron gun drive controlling unit
58 build surface temperature calculating unit
59 display unit
100, 100A three-dimensional powder bed fusion additive manufacturing (PBF-AM) apparatus
541 correspondence information between thermal electrons and build surface temperature

**Claims**

1. A three-dimensional powder bed fusion additive manufacturing (PBF-AM) apparatus (100) comprising:

   a storage unit (54) configured to store first correspondence information (541) that is correspondence information between an amount of thermal electrons emitted from a build surface and temperature of the build surface, the build surface being an uppermost layer among powder layers (13) formed by building up layers of a powder sample (11) on a build plate (9);
   a beam generating unit (2) configured to irradiate the build surface with a beam;
   a thermal electron detecting unit (19) configured to detect the thermal electrons emitted from the build surface; and
   a build surface temperature calculating unit (58) configured to calculate the temperature of the build surface with reference to the first correspondence information (541) on the basis of the thermal electrons detected by the thermal electron detecting unit (19).

2. The three-dimensional PBF-AM apparatus (100) according to claim 1, further comprising:

   a metal deposition preventive cover (14) provided at a position that is above the build surface and covers a side surface of an area through which the beam passes, the deposition preventive cover (14) being electrically insulated from a ground potential; and
   a voltage applying unit (19) configured to apply a predetermined positive voltage to the deposition preventive cover (14),
   wherein the thermal electron detecting unit (19) is configured to detect a change in a current due to the thermal electrons drawn into the deposition preventive cover (14).

3. The three-dimensional PBF-AM apparatus (100) according to claim 1 or 2, wherein
   correspondence information between the thermal electrons and the temperature of the build surface is generated by using a temperature conversion equation for converting an amount of the thermal electrons detected by the thermal electron detecting unit (19) into the temperature of the build surface.

4. The three-dimensional PBF-AM apparatus (100) according to claim 3, wherein
   the build surface temperature calculating unit (58) is configured to change the temperature conversion equation according to a material of a build object (8) generated by irradiating the powder sample (11) with the beam or a proportion of the build object (8) in the build surface.

5. The three-dimensional PBF-AM apparatus (100) according to any one of claims 1 to 4, wherein

   the beam generating unit (2) is configured to convert the beam into a pulse beam and emit the pulse beam, and
   the thermal electron detecting unit (19) includes a lock-in amplifier and is configured to detect the thermal electrons with a frequency of a pulse of the beam used as a reference signal.

6. The three-dimensional PBF-AM apparatus (100) according to any one of claims 1 to 5, further comprising:

an electron gun drive controlling unit (57) configured to control operation of emitting the beam on the basis of the temperature of the build surface calculated by the build surface temperature calculating unit (58).

7. A three-dimensional PBF-AM apparatus (100A) comprising:

a storage unit (54) configured to store second correspondence information that is correspondence information between an amount of light emitted from a build surface and temperature of the build surface, the build surface being an uppermost layer among powder layers (13) formed by building up layers of a powder sample (11) on a build plate (9); and
a beam generating unit (2) configured to irradiate the build surface that is the uppermost layer among the powder layers (13) with a beam; and
a photomultiplier tube (PMT) (25) configured to detect light emitted from the build surface; and
a build surface temperature calculating unit (58) configured to calculate the temperature of the build surface with reference to the second correspondence information on the basis of the amount of the light detected by the PMT (25).

8. The three-dimensional PBF-AM apparatus (100A) according to claim 7, wherein

the PMT (25) is a PMT used in a secondary electron detector (20) provided in the three-dimensional PBF-AM apparatus (100A) for the purpose of observing a secondary electron image, and
detection of the light by the PMT (25) is performed in a state in which no voltage is applied to a scintillator (21) constituting the PMT (25).

9. The three-dimensional PBF-AM apparatus (100A) according to claim 7 or 8, wherein
the beam generating unit (2) is configured to convert the beam into a pulse beam and emit the pulse beam, an amplifier (26) provided at a subsequent stage of the PMT (25) includes a lock-in amplifier, and the secondary electron detector (20) is configured to detect the light with a frequency of a pulse of the beam used as a reference signal.

10. The three-dimensional PBF-AM apparatus (100A) according to any one of claims 7 to 9, further comprising
an electron gun drive controlling unit (57) configured to control operation of emitting the beam on the basis of the temperature of the build surface calculated by the build surface temperature calculating unit (58).

11. A three-dimensional PBF-AM method, comprising:

a step in which a storage unit (54) stores first correspondence information (541) that is correspondence information between an amount of thermal electrons emitted from a build surface and temperature of the build surface, the build surface being an uppermost layer among powder layers (13) formed by building up layers of a powder sample (11) on a build plate (9);
a step in which a beam generating unit (2) irradiates the build surface with a beam; and
a step in which a thermal electron detecting unit (19) detects the thermal electrons emitted from the build surface; and
a step in which a build surface temperature calculating unit (58) calculates the temperature of the build surface with reference to the first correspondence information (541) on the basis of the thermal electrons detected by the thermal electron detecting unit (19).

12. A three-dimensional PBF-AM method comprising:

a step in which a storage unit (54) stores second correspondence information that is correspondence information between an amount of light emitted from a build surface and temperature of the build surface, the build surface being an uppermost layer among powder layers (13) formed by building up layers of a powder sample (11) on a build plate (9);
a step in which a beam generating unit (2) irradiates the build surface with a beam;
a step in which a PMT (25) detects light emitted from the build surface; and
a step in which the build surface temperature calculating unit (58) calculates the temperature of the build surface with reference to the second correspondence information on the basis of the amount of the light detected by the PMT (25).

## FIG. 1

# FIG. 2

50

| 51 | | B | 55 |
|---|---|---|---|

CPU

Z DRIVE CONTROLLING UNIT

52

56

RAM

FUNNEL DRIVE
CONTROLLING UNIT

53

57

ROM

ELECTRON GUN DRIVE
CONTROLLING UNIT

54

58

STORAGE UNIT

BUILD SURFACE TEMPERATURE
CALCULATING UNIT

541

CORRESPONDENCE
INFORMATION
BETWEEN THERMAL
ELECTRONS AND BUILD
SURFACE TEMPERATURE

59

DISPLAY UNIT

# FIG. 3

FIG. 4

# *FIG. 5*

```
┌──────────┐   ┌──────────┐   ┌──────────┐   ┌──────────┐
│ SQUEEGEE │───│    PH    │───│   MELT   │───│    AH    │
└──────────┘   └──────────┘   └──────────┘   └──────────┘

         ┌────────────┐
         │ LOWER Z FOR│
         │ ONE LAYER  │
         └────────────┘
```

# FIG. 6

START

APPLY POSITIVE VOLTAGE TO DEPOSITION PREVENTIVE COVER BY VOLTAGE SUPERIMPOSED CURRENT AMPLIFIER ～S1

DETECT THERMAL ELECTRONS CAPTURED BY DEPOSITION PREVENTIVE COVER BY VOLTAGE SUPERIMPOSED CURRENT AMPLIFIER ～S2

CALCULATE BUILD SURFACE TEMPERATURE WITH REFERENCE TO CORRESPONDENCE INFORMATION BETWEEN THERMAL ELECTRONS AND BUILD SURFACE TEMPERATURE BY BUILD SURFACE TEMPERATURE CALCULATING UNIT ON BASIS OF AMOUNT OF DETECTED THERMAL ELECTRONS ～S3

END

# FIG. 7

100A

Z

Y⊙ ——→X

# FIG. 8

# FIG. 9

OUTPUT OF SECONDARY ELECTRON DETECTOR

BUILD SURFACE TEMPERATURE

## FIG. 10

```
           ┌─────────────┐
           │    START    │
           └──────┬──────┘
                  │
                  ▼
┌────────────────────────────────────┐
│   DETECT LIGHT EMITTED FROM BUILD   │
│        SURFACE IN STATE IN WHICH    │      ～S11
│ NO VOLTAGE IS APPLIED TO SCINTILLATOR │
│    BY PHOTOMULTIPLIER TUBE (PMT)     │
└──────────────────┬─────────────────┘
                   │
                   ▼
┌────────────────────────────────────┐
│  CALCULATE BUILD SURFACE TEMPERATURE │
│     BY BUILD SURFACE TEMPERATURE    │
│         CALCULATING UNIT BY USING   │      ～S12
│  CALIBRATION CURVE ON BASIS OF OUTPUT │
│       VALUE OF SECONDARY ELECTRON   │
│   DETECTOR (DETECTION SIGNAL OF PMT) │
└──────────────────┬─────────────────┘
                   │
                   ▼
            ┌─────────────┐
            │     END     │
            └─────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001152204 A